# EUROPÄISCHE PATENTSCHRIFT

(11) **EP 4 015 241 B1**
(45) Veröffentlichungstag und Bekanntmachung des Hinweises auf die Patenterteilung: **26.07.2023**
(21) Anmeldenummer: 21212774.0
(22) Anmeldetag: 07.12.2021
(51) Int. Cl.: B60C 7/10, B60C 7/22, B60C 19/08, B29D 30/00

(54) **VOLLREIFEN UND VERFAHREN ZUR HERSTELLUNG**
SOLID TYRE AND METHOD FOR MANUFACTURING THE SAME
BANDAGE PLEIN ET PROCÉDÉ DE FABRICATION

(30) Priorität: 15.12.2020 DE 102020215871
(43) Veröffentlichungstag der Anmeldung: 22.06.2022
(73) Patentinhaber: Continental Reifen Deutschland GmbH, 30165 Hannover (DE)
(72) Erfinder: Müller, Matthias-Stephan, 30165 Hannover (DE); Sauerwald, Hans-Jürgen, 30165 Hannover (DE)
(74) Vertreter: Continental Corporation

(56) Entgegenhaltungen:
- WO-A1-98/07585
- DE-U1- 8 510 579
- US-A- 3 217 824

## Beschreibung

Die Erfindung betrifft ein Fahrzeugreifen, wobei der Fahrzeugreifen ein Vollreifen ist, mit einem Laufstreifen mit einer Lauffläche, mit einem elektrisch leitfähigen Bodenverbund und mit zwei Seitenwänden sowie ein Verfahren zur Herstellung eines solchen Reifens.

Flurförderfahrzeuge weisen, eingesetzt in sogenannten Non-Marking Anwendungen, in der Regel Vollreifen auf, die elektrisch nicht leitfähig sind.

Dadurch kann es aufgrund von plötzlichen Spannungsentladungen zu einem zumindest temporären Ausfall der Fahrzeugelektronik kommen. Deshalb werden derartige Fahrzeuge aufwendig geerdet, um elektrostatische Aufladungen zu vermeiden. Dies erfolgt zum Beispiel in der Form von Erdungsketten, die unter dem Fahrzeug angebracht werden. Die Anforderung an eine ausreichende und permanente Erdung wird durch die zunehmende Digitalisierung der Fahrzeuge immer wichtiger.

Zur Sicherstellung der elektrischen Ableitfähigkeit bei Non-Marking-Vollreifen offenbart die DE 10 2016 2125 09 A, dass auf mindestens einer Seitenwand des Fahrzeugreifens ein axial äußeres Seitenwandbauteil mit einer elektrisch leitfähigen Gummimischung angeordnet ist. Das Seitenwandbauteil bildet dabei einen elektrisch leitfähigen Pfad von der Lauffläche bis zu einem radial inneren Reifenbauteil. Hierbei ist jedoch ein erheblicher Anteil der äußeren Oberfläche durch eine elektrisch leitfähige Gummimischung, welche insbesondere nicht den Non-Marking Anforderungen genügt, ausgebildet.

Der Erfindung liegt die Aufgabe zugrunde, einen Fahrzeugreifen, insbesondere einen Non-Marking-Vollreifen, bereitzustellen, bei dem eine permanente elektrische Ableitfähigkeit zum Fahrbahnuntergrund bei gleichzeitig stark verringerter elektrisch leitfähig ausgeführter äußerer Oberfläche des Fahrzeugreifens, sichergestellt wird. Weiter soll ein solcher Reifen auf einfache Art und Weise herstellbar sein.

Gelöst wird die Aufgabe durch einen Vollreifen gemäß Anspruch 1.

Der erfindungsgemäße Vollreifen zeichnet sich dadurch aus, dass der Laufstreifen drei in einer Abfolge in axialer Richtung aR angeordnete, sich über einen Reifenumfang erstreckende Umfangsbänder, welche jeweils über den gesamten Umfang die Lauffläche mitbilden, aufweist, dass das mittlere Umfangsband der drei Umfangsbänder elektrisch leitfähig ausgebildet ist und über ein zur Gänze in einem Reifeninneren angeordnetes elektrisch leitfähiges Verbindungselement mit dem elektrisch leitfähigen Bodenverbund verbunden ist und dass die beiden äußeren Umfangsbänder der drei Umfangsbänder aus einer elektrisch nicht leitfähigen Gummimischung bestehen.

Ein Vorteil der Erfindung ist insbesondere darin zu sehen, dass mit der neuartigen Reifenkonstruktion weiterhin eine permanente elektrische Ableitfähigkeit des Reifens zum Fahrbahnuntergrund sichergestellt wird. Dadurch sind plötzliche Spannungsentladungen, die zum Ausfall der Fahrzeugelektronik des Flurförderfahrzeuges führen können, vermieden.

Die Lauffläche ist im Bereich des mittleren Umfangsbandes elektrisch leitfähig ausgebildet. Im Bereich der beiden äußeren Umfangsbänder, insbesondere im gesamten vom mittleren Umfangsband verschiedenen Bereich der Lauffläche, ist die Lauffläche aus einer elektrisch nicht leitfähigen Gummimischung ausgebildet. Weiter kann diese Laufstreifenmischung bezüglich weiterer Reifeneigenschaften, wie thermische Eigenschaften oder Reißfestigkeit, optimiert sein.

Da das elektrisch leitfähig ausgeführte Umfangsband das mittlere Umfangsband der drei Umfangsbänder ist, ist die elektrische Leitfähigkeit auch bei verstärktem Schulterabrieb zuverlässiger gewährleistet.

Das elektrisch leitfähige Verbindungselement verbindet das mittlere Umfangsband mit dem elektrisch leitfähigen Bodenverbund und ist zur Gänze im Reifeninnenraum angeordnet. Somit ermöglicht es einen elektrisch leitfähigen Pfad, der sich von dem vom mittleren Umfangsband gebildeten Teil der Lauffläche durch den Reifeninnenraum bis zum Bodenverbund erstreckt. Beim auf einer Felge montierten Reifen kann der elektrisch leitfähige Pfad weiter vom Bodenverbund zur Felge geführt sein. Eine elektrisch leitfähige Ausbildung von weiteren äußeren Bauteilen, insbesondere einer axial äußeren Oberfläche einer der beiden Seitenwände, ist nicht nötig. Somit ist die äußere Oberfläche des Vollreifens, die eine elektrisch leitfähige und optional kreidende Gummimischung aufweist, stark reduzierbar.

Somit ist ein Fahrzeugreifen, insbesondere einen Non-Marking-Vollreifen, bereitgestellt, bei dem eine permanente elektrische Ableitfähigkeit zum Fahrbahnuntergrund bei gleichzeitig stark verringerter elektrisch leitfähig ausgeführter äußerer Oberfläche des Fahrzeugreifens sichergestellt wird.

Für die elektrische Ableitfähigkeit eines Reifens ist oftmals ein elektrischer Ableitwiderstand von maximal 1*10^10 Ohm, bevorzugt von maximal 1*10^8 Ohm, gefordert. Der elektrische Ableitwiderstand kann dabei am Neureifen gemessen sein gemäß wdk-Leitlinie 110.

Um einen solche elektrische Ableitfähigkeit zu gewährleisten, sind ein oder mehrere Bauteile des Reifens elektrisch leitfähig ausgeführt.

Entsprechend kann ein Bauteil eines Reifens im Zuge der Anmeldung als elektrisch leitfähig bezeichnet werden, wenn es einen elektrischen Ableitwiderstand von kleiner als 1*10^9 Ohm, bevorzugt von kleiner als 1*10^7 Ohm, aufweist. Weist ein elektrisch leitfähig ausgebildetes Bauteil des Reifens eine Gummimischung auf oder besteht es aus einer Gummimischung, so kann es in vulkanisiertem Zustand einen elektrischen Ableitwiderstand von kleiner als 1*10^9 Ohm, bevorzugt von kleiner als 1*10^7 Ohm, aufweisen.

Im Zuge der Anmeldung kann ein Material, insbesondere eine Gummimischung, als elektrisch leitfähig bezeichnet werden, wenn ein daraus gebildetes Bauteil am fertigen vulkanisierten Reifen elektrisch leitfähig ausgebildet ist, d.h. wenn ein daraus gebildetes Bauteil am fertigen vulkanisierten Reifen einen elektrischen Ableitwiderstand von kleiner als 1*10^9 Ohm, insbesondere von kleiner als 1*10^7 Ohm, aufweist. Die elektrisch leitfähige Gummimischung kann eine mit Rußmaterial gefüllte Mischung zur Sicherstellung der elektrischen Leitfähigkeit sein.

Ein Bauteil eines Reifens kann im Zuge der Anmeldung als elektrisch nicht leitfähig bezeichnet werden, wenn es einen elektrischen Ableitwiderstand von mindestens 1*10^11 Ohm aufweist. Weist ein elektrisch nicht leitfähig ausgebildetes Bauteil eine Gummimischung auf oder besteht es aus einer Gummimischung, so kann es in vulkanisiertem Zustand einen elektrischen Ableitwiderstand von mindestens 1*10^11 Ohm aufweisen.

Im Zuge der Anmeldung kann ein Material, insbesondere eine Gummimischung, als elektrisch nicht leitfähig bezeichnet werden, wenn ein daraus gebildetes Bauteil am fertigen vulkanisierten Reifen elektrisch nicht leitfähig ausgebildet ist, d.h. wenn ein daraus gebildetes Bauteil am fertigen vulkanisierten Reifen einen elektrischen Ableitwiderstand von mindestens 1*10^11 Ohm aufweist.

Beispiele für ein Bauteil eines Reifens in dieser Anmeldung sind der elektrisch leitfähige Bodenverbund, das mittlere Umfangsband, jeweils die beiden äußeren Umfangsbänder, das elektrisch leitfähige Verbindungselement, das erste Zwischenbauteil und das zweite Zwischenbauteil.

Im Sinne der Erfindung kann ein Verbund, ein Element oder ein Bauteil jeweils ein- oder mehrteilig ausgeführt sein.

Zur Sicherstellung einer ausreichenden elektrischen Ableitfähigkeit kann das mittlere Umfangsband eine axiale Breite von 1% bis 50% einer Laufflächenbreite aufweisen.

Der Reifen ist besonders einfach herstellbar, wenn das mittlere Umfangsband als in Umfangsrichtung geschlossener Umfangsring ausgeführt ist. Der Reifen ist auch dann besonders einfach herstellbar, wenn die beiden äußeren Umfangsbänder jeweils als in Umfangsrichtung geschlossener Umfangsring ausgeführt sind.

Eine vorteilhafte Ausführungsform ist dadurch gegeben, dass die beiden äußeren Umfangsbänder der drei Umfangsbänder aus einer nichtkreidenden elektrisch nicht leitfähigen Gummimischung bestehen.

Der Vollreifen kann somit im Wesentlichen eine, insbesondere helle, nichtkreidende und elektrisch nicht leitfähige Gummimischung als Laufstreifenmischung aufweisen, die gegenüber einem hellen Fahrbahnuntergrund keine dunklen Markierungen hinterlässt.

Die Erfindung eignet sich somit besonders für nichtkreidende Vollreifen, auch Non-Marking-Vollreifen genannt. Bei nichtkreidenden Vollreifen kommen i.a. helle Gummimischungen zum Einsatz, die keine Markierungen auf dem Fahrbahnoberfläche hinterlassen können.

Eine weitere vorteilhafte Ausführungsform ist dadurch gegeben, dass der Fahrzeugreifen ein radial zwischen dem Bodenverbund und dem Laufstreifen sowie axial zwischen den zwei Seitenwänden angeordnetes erstes Zwischenbauteil aufweist, welches elektrisch nicht leitfähig ausgebildet ist und dass das elektrisch leitfähige Verbindungselement vom mittleren Umfangsband aus auf einer oder auf beiden axialen Seiten des Reifens in Richtung der jeweiligen Seitenwand geführt ist und axial zwischen dem ersten Zwischenbauteil und der jeweiligen Seitenwand um das erste Zwischenbauteil herum bis zum Bodenverbund geführt ist.

Das elektrisch nicht leitfähig ausgebildet Zwischenbauteil kann somit bezüglich anderer Reifeneigenschaften als der elektrischen Leitfähigkeit, insbesondere bezüglich seiner Elastizität, optimiert sein. Es kann eine größere Elastizität aufweisen als das elektrisch leitfähige Verbindungselement.

Ist das elektrisch leitfähige Verbindungselement vom mittleren Umfangsband aus auf genau einer axialen Seite des Reifens nach axial außen geführt und axial zwischen dem ersten Zwischenbauteil und der jeweiligen Seitenwand um das erste Zwischenbauteil herum bis zum Bodenverbund geführt, so ist die elektrische Leitfähgkeit trotz geringem Einsatz an elektrisch leitfähigem Material des Verbindungselements erreichbar.

Ist das elektrisch leitfähige Verbindungselement vom mittleren Umfangsband aus auf beiden axialen Seite des Reifens jeweils nach axial außen geführt und axial zwischen dem ersten Zwischenbauteil und der jeweiligen Seitenwand um das erste Zwischenbauteil herum bis zum Bodenverbund geführt, so ist die elektrische Leitfähgkeit auch bei Beschädigung des elektrisch leitfähigen Verbindungselements auf einer der axialen Seiten weiterhin gewährleistet.

Eine weitere vorteilhafte Ausführungsform ist dadurch gegeben, dass das mittlere Umfangsband und / oder das elektrisch leitfähige Verbindungselement und / oder der Bodenverbund jeweils ganz oder teilweise aus einer elektrisch leitfähigen Gummimischung bestehen, insbesondere dass das mittlere Umfangsband aus einer elektrisch leitfähigen Gummimischung besteht.

Dadurch wird auf einfache Weise eine hohe elektrische Ableitfähigkeit sowie eine einfache Herstellbarkeit des Reifens gewährleistet. Gummi eignet sich hervorragend für die zuverlässige Sicherstellung von elektrisch leitfähig ausgeführten Bauteilen im Reifen bei gleichzeitig einfacher Herstellbarkeit des Reifens.

Dieser Vorteil ergibt sich erst recht, wenn das mittlere Umfangsband und das elektrisch leitfähige Verbindungselement jeweils aus einer elektrisch leitfähigen Gummimischung bestehen und wenn der Bodenverbund ganz oder teilweise aus einer elektrisch leitfähigen Gummimischung besteht.

Eine zweckmäßige Ausführungsform ist auch dadurch gegeben, dass das mittlere Umfangsband und / oder das elektrisch leitfähige Verbindungselement und / oder der Bodenverbund jeweils einen elektrischen Ableitwiderstand von kleiner als 1*10^9 Ohm, bevorzugt von kleiner als 1*10^7 Ohm, aufweisen.

Hierdurch wird gewährleistet, dass das mittlere Umfangsband und / oder das elektrisch leitfähige Verbindungselement und / oder der Bodenverbund jeweils eine für eine vorteilhafte elektrische Ableitfähigkeit des Reifens ausreichende elektrische Ableitfähigkeit aufweist.

Eine weitere vorteilhafte Ausführungsform ist dadurch gegeben, dass das mittlere Umfangsband und das elektrisch leitfähige Verbindungselement und der Bodenverbund zusammen in Summe einen elektrischen Ableitwiderstand von maximal 1 *10^10 Ohm, bevorzugt von maximal 1*10^8 Ohm, aufweisen.

Hierdurch weist der Reifen eine ausreichende elektrische Ableitfähigkeit auf. Der fertige vulkanisierte Reifen kann somit zur Sicherstellung einer ausreichend elektrischen Ableitfähigkeit einen elektrischen Ableitwiderstand von maximal 1*10^10 Ohm, bevorzugt von maximal 1*10^8 Ohm, aufweisen.

Zweckmäßig ist es, wenn ein elektrisch nicht leitfähiges Bauteil aus einer elektrisch nicht leitfähigen Gummimischung ausgebildet ist oder diese aufweist. Das Bauteil kann bezüglich anderer Eigenschaften optimiert sein. Es kann sich bei dem elektrisch nicht leitfähigen Bauteil um das erste Zwischenbauteil und/oder eine oder beide Seitenwände handeln.

Zweckmäßig ist es, wenn ein elektrisch nicht leitfähiges Bauteil einen elektrischen Ableitwiderstand von mindestens 1*10^11 Ohm aufweist. Das Bauteil kann bezüglich anderer Eigenschaften optimiert sein. Es kann sich bei dem elektrisch nicht leitfähigen Bauteil um das erste Zwischenbauteil und/oder eine oder beide Seitenwände und/oder um die äußeren Umfangsbänder handeln.

Eine weitere vorteilhafte Ausführungsform ist dadurch gegeben, dass zumindest eine Seitenwand, bevorzugt beide Seitenwände, der zwei Seitenwände aus einer nichtkreidenden und / oder elektrisch nicht leitfähigen Gummimischung.

Somit ist die äußere Oberfläche des Reifens, welche elektrisch leitfähig ausgebildet ist, stark reduzierbar, insbesondere bei einer Ausführung beider Seitenwände aus einer nichtkreidenden und elektrisch nicht leitfähigen Gummimischung. Der Reifen ist somit besonders gut bezüglich seiner Non-Marking Eigenschaften weiter optimierbar. Weiter ist die Gummimischung der Seitenwände bezüglich anderer Reifeneigenschaften, wie Reißfestigkeit und Abriebsfestigkeit, optimierbar. Bei der Gummimischung kann es sich um eine nichtkreidende und elektrisch nicht leitfähigen Silikamischung handeln.

Eine weitere vorteilhafte Ausführungsform ist dadurch gegeben, dass der Fahrzeugreifen ein radial zwischen dem Bodenverbund und dem Laufstreifen sowie axial zwischen den zwei Seitenwänden angeordnetes zweites Zwischenbauteil aufweist, welches elektrisch leitfähig ausgebildet ist und das elektrisch leitfähige Verbindungselement bildet oder mitbildet.

Hierdurch ist die elektrische Leitfähigkeit des Reifens bei gleichzeitig einfacher Konstruktion und Herstellbarkeit gewährleistet.

Eine weitere vorteilhafte Ausführungsform ist dadurch gegeben, dass der Bodenverbund eine elektrisch leitfähige Stahlbodenbandage oder eine drahtarmierte Elastikbandage aufweist.

In einer weiteren vorteilhaften Weiterbildung der Erfindung ist vorgesehen, dass der Bodenverbund eine elektrisch leitfähige Stahlbodenbandage aufweist. Es kann sich um einen Stahlbodenbandagen-Reifen handeln.

In einer weiteren vorteilhaften Weiterbildung der Erfindung ist vorgesehen, dass der Bodenverbund eine drahtarmierte Elastikbandage aufweist. Es kann sich um einen drahtarmierten Elastikbandagen-Reifen handeln.

Zweckmäßig ist es, wenn es sich um einen Vollreifen, insbesondere um einen Non-Marking Vollreifen, für Flurförderfahrzeuge handelt. Flurförderfahrzeuge haben besonders hohe Ansprüche an den Zielkonflikt zwischen nichtkreidenden Eigenschaften und elektrischer Ableitfähigkeit.

Ein solcher Vollreifen ist auf einfache Art und Weise durch das folgende Verfahren herstellbar. Das Verfahren umfasst zumindest die folgenden Schritte:
a) Bereitstellen eines nicht vulkanisierten Vorproduktes eines Reifenrohlings auf einer Bautrommel, wobei das Vorprodukt zumindest aus einem elektrisch leitfähigen Bodenverbund und einem mit dem Bodenverbund verbundenen elektrisch leitfähigen Verbindungselement besteht,
b) Applizieren eines elektrisch leitfähigen Materials auf einen ersten axialen Bereich des elektrisch leitfähigen Verbindungselements und über einen Reifenumfang umlaufend zur Bildung eines mittleren Umfangsbands, welches sich zumindest über einen Umfang des Reifens erstreckt und elektrisch leitfähig ausgebildet ist,
c) auf jeder Seite axial außerhalb des ersten axialen Bereich applizieren einer elektrisch nicht leitfähigen Gummimischung auf das Vorprodukt zur Bildung von zwei äußeren Umfangsbändern, die sich über den Reifenumfang erstrecken;
d) Applizieren der Seitenwände;
e) Fertigstellen des Reifenrohlings;
e) Positionieren des Reifenrohlings in einer Vulkanisationsform;
f) formgebendes Vulkanisieren des Reifenrohlings.

Hierdurch ist auf einfache Art und Weise ein Vollreifen, insbesondere ein Non-Marking Vollreifen, herstellbar, bei dem eine permanente elektrische Ableitfähigkeit zum Fahrbahnuntergrund bei gleichzeitig stark verringerter elektrisch leitfähig ausgeführter äußerer Oberfläche des Fahrzeugreifens sichergestellt wird.

Der so hergestellte Reifen ist ein Vollreifen mit einem Laufstreifen mit einer Lauffläche, mit einem elektrisch leitfähigen Bodenverbund und mit zwei Seitenwänden. Der Reifen zeichnet sich dadurch aus, dass der Laufstreifen drei in einer Abfolge in axialer Richtung aR angeordnete, sich über einen Reifenumfang erstreckende Umfangsbänder, welche jeweils über den gesamten Umfang die Lauffläche mitbilden, aufweist, dass das mittlere Umfangsband der drei Umfangsbänder elektrisch leitfähig ausgebildet ist und über ein zur Gänze in einem Reifeninneren angeordnetes elektrisch leitfähiges Verbindungselement mit dem elektrisch leitfähigen Bodenverbund verbunden ist und dass die beiden äußeren Umfangsbänder der drei Umfangsbänder aus einer elektrisch nicht leitfähigen Gummimischung bestehen.

Schritt b) kann vor oder nach Schritt c) und/oder d) erfolgen. Schritt b) und c) und/oder Schritt b) und d) können zur Steigerung der Effizienz auch zumindest teilweise gleichzeitig erfolgen.

Für die Herstellung eines Non-Marking Reifens ist es vorteilhaft, wenn die beiden äußeren Umfangsbänder der drei Umfangsbänder aus einer nichtkreidenden elektrisch nicht leitfähigen Gummimischung bestehen.

Eine weitere Ausführungsform ist dadurch gegeben, dass in Schritt b) das Applizieren des elektrisch leitfähigen Materials durch Aufwickeln oder Aufspulen zumindest eines Streifens des elektrisch leitfähigen Materials oder durch Einspritzen des elektrisch leitfähigen Materials erfolgt.

Hierdurch ist das elektrisch leitfähig ausgebildete mittlere Umfangsband besonders einfach herstellbar.

In einer zweckmäßigen Ausführungsform wird in Schritt c) die elektrisch nicht leitfähige Gummimischung auf einfache Art und Wiese durch Aufwickeln oder Aufspulen zumindest eines Streifens aus der entsprechenden Gummimischung appliziert.

Eine weitere vorteilhafte Ausführungsform ist dadurch gegeben, dass die Vulkanisationsform einen Austriebsspalt aufweist und dass der Austriebsspalt axial im ersten axialen Bereich angeordnet ist.

Der Austriebsspalt kann sich dabei auf beide Vulkanisationsformhälften aufteilen. Dadurch, dass der Austriebsspalt axial im ersten axialen Bereich angeordnet ist, kann sichergestellt werden, dass das elektrisch leitfähige Material zur Bildung des mittleren Umfangsbands im Zuge der formgebenden Vulkanisation an der zur Mitbildung der Lauffläche notwendigen Postion verbleibt. Hierdurch ist die Ausbildung eines die Lauffläche umlaufend mitbildenden mittleren Umfangsbandes und somit eine permanente Erdung des Reifens leichter ermöglicht.

Eine weitere vorteilhafte Ausführungsform ist dadurch gegeben, dass das Vorprodukt in Schritt a) radial zwischen dem Bodenverbund und dem elektrisch leitfähigen Verbindungselement ein erstes Zwischenbauteil aufweist, dass das erste Zwischenbauteil elektrisch nicht leitfähig ausgebildet ist, und dass das elektrisch leitfähige Verbindungselement auf einer radial äußeren Oberfläche des ersten Zwischenbauteils aufliegend auf einer oder auf beiden axialen Seiten des Reifens um das erste Zwischenbauteil herum bis zum Bodenverbund geführt ist.

Hierdurch ist ein Vollreifen herstellbar, der ein radial zwischen dem Bodenverbund und dem Laufstreifen sowie axial zwischen den zwei Seitenwänden angeordnetes erstes Zwischenbauteil aufweist, welches elektrisch nicht leitfähig ausgebildet ist, wobei das elektrisch leitfähige Verbindungselement vom mittleren Umfangsband aus auf einer oder auf beiden axialen Seiten des Reifens in Richtung der jeweiligen Seitenwand geführt ist und axial zwischen dem ersten Zwischenbauteil und der jeweiligen Seitenwand um das erste Zwischenbauteil herum bis zum Bodenverbund geführt ist.

Eine weitere vorteilhafte Ausführungsform ist dadurch gegeben, dass das Applizieren der elektrisch nicht leitfähigen Gummimischung zur Bildung zumindest eines der äußeren Umfangsbänder und das Applizieren der an das äußere Umfangsband anschließende Seitenwand durch Aufwickeln oder Aufspulen zumindest eines Streifens einer elektrisch nicht leitfähigen Gummimischung erfolgt, und dass beim Aufwickeln oder Aufspulen des zumindest einen Streifens ein Verhältnis aus einer Anlieferungsgeschwindigkeit des zumindest einen Streifens zu einer Wickel- oder Spulgeschwindigkeit im Bereich der zu bildenden Seitenwand sowohl kleiner ist als im Bereich des zu bildenden äußeren Umfangsbands als auch kleiner ist als 1.

Hierdurch ist ein einfaches Herstellungsverfahren zur Bildung des äußeren Umfangsbandes sowie der einen Seitenwand ermöglicht. Die äußere Oberfläche des Reifens ist somit auf einfache Art und Weise bezgülich der Ableitfähigkeit und weiteren Reifeneigenschaften optimierbar.

Eine weitere Optimierung ist ermöglicht, wenn beide äußeren Umfangsbänder und die daran anschließenden Seitenwände derart appliziert werden.

Eine weitere vorteilhafte Ausführungsform ist dadurch gegeben, dass zumindest eine Seitenwand, bevorzugt beide Seitenwände, der beiden Seitenwände aus einer nichtkreidenden und/oder elektrisch nicht leitfähigen Gummimischung. Bei der Gummimischung kann es sich um eine nichtkreidende und elektrisch nicht leitfähigen Silikamischung handeln.

Eine weitere vorteilhafte Ausführungsform ist dadurch gegeben, dass das mittlere Umfangsband und / oder das elektrisch leitfähige Verbindungselement und / oder der Bodenverbund ganz oder teilweise aus einer elektrisch leitfähigen Gummimischung bestehen, insbesondere dass das mittlere Umfangsband aus einer elektrisch leitfähigen Gummimischung besteht.

Dadurch wird auf einfache Weise eine hohe elektrische Ableitfähigkeit des Reifens gewährleistet.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 und 2: Unterschiedliche Ausführungsbeispiele eines erfindungsgemäßen Vollreifens;
Fig. 3 bis 6: Verfahren zur Herstellung des erfindungsgemäßen Vollreifens.

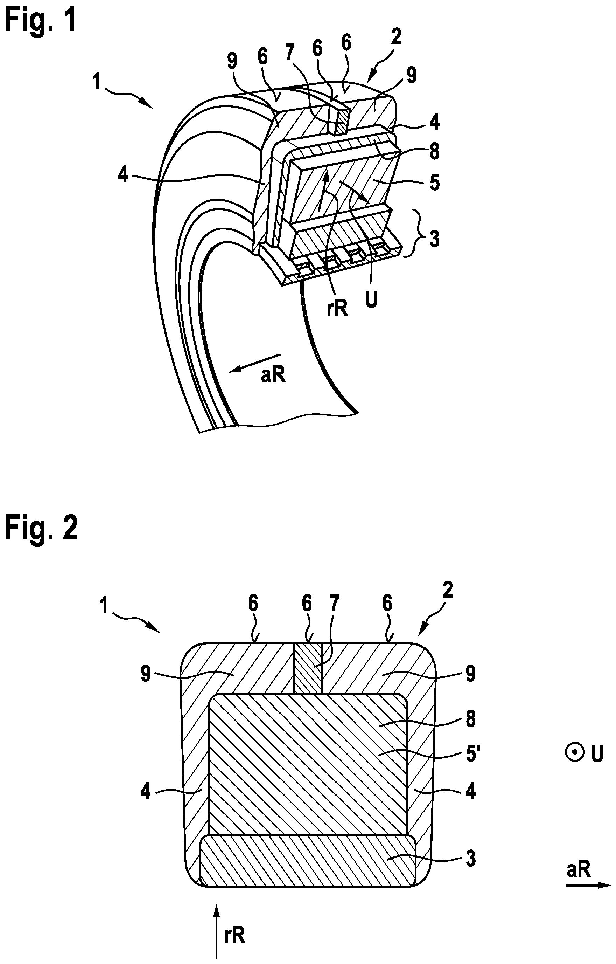

Die Figur 1 zeigt ein Ausführungsbeispiel eines erfindungsgemäßen Vollreifens 1. Es handelt sich um Industriereifen, insbesondere einen Vollreifen für ein Flurförderfahrzeug, in einer Schnittansicht. Der Reifen 1 ist mit einem Laufstreifen 2 mit einer Lauffläche 6, mit einem elektrisch leitfähigen Bodenverbund 3 und mit zwei Seitenwänden 4 ausgestattet. Weiter zeichnet sich der Reifen dadurch aus, dass der Laufstreifen 2 drei in einer Abfolge in axialer Richtung aR angeordnete, sich über einen Reifenumfang erstreckende Umfangsbänder, welche jeweils über den gesamten Umfang die Lauffläche 6 mitbilden, aufweist, dass das mittlere Umfangsband 7 der drei Umfangsbänder elektrisch leitfähig ausgebildet ist und über ein zur Gänze in einem Reifeninneren angeordnetes elektrisch leitfähiges Verbindungselement 8 mit dem elektrisch leitfähigen Bodenverbund 3 verbunden ist und dass die beiden äußeren Umfangsbänder 9 der drei Umfangsbänder aus einer elektrisch nicht leitfähigen Gummimischung, insbesondere aus einer nichtkreidenden und elektrisch nicht leitfähigen Gummimischung, bestehen.

Bedeutend ist, dass das mittlere Umfangsband 7 die Lauffläche 6 über den gesamten Umfang des Reifens 1 mitbildet. Im Bereich der beiden äußeren Umfangsbänder 9, insbesondere im gesamten vom mittleren Umfangsband 7 verschiedenen Bereich der Lauffläche, ist die Lauffläche 6 aus einer elektrisch nicht leitfähigen Gummimischung, insbesondere aus einer nichtkreidenden und elektrisch nicht leitfähigen Gummimischung, ausgebildet.

Der dargestellte Fahrzeugreifen 1 weist ein radial zwischen dem Bodenverbund 3 und dem Laufstreifen 2 sowie axial zwischen den zwei Seitenwänden 4 angeordnetes erstes Zwischenbauteil 5 auf, welches insbesondere elektrisch nicht leitfähig ausgebildet ist. Weiter ist das elektrisch leitfähige Verbindungselement 8 vom mittleren Umfangsband 7 aus auf beiden axialen Seiten des Reifens in Richtung der jeweiligen Seitenwand sowie axial zwischen dem ersten Zwischenbauteil 5 und der jeweiligen Seitenwand 4 um das erste Zwischenbauteil 5 herum bis zum Bodenverbund 3 geführt.

Alternativ kann das elektrisch leitfähige Verbindungselement 8 auch auf nur einer axialen Seite des Reifens um das erste Zwischenbauteil 5 herum geführt sein.

Das mittlere Umfangsband 7 kann eine axiale Breite von 1 % bis 50 % einer Laufflächenbreite aufweisen. Wie dargestellt kann das mittlere Umfangsband 7 und/oder die äußeren Umfangsbänder 9 jeweils als in Umfangsrichtung U geschlossene Umfangsringe ausgeführt sein.

Das mittlere Umfangsband 7 und / oder das elektrisch leitfähige Verbindungselement 8 und / oder der Bodenverbund 3 kann ganz oder teilweise aus einer elektrisch leitfähigen Gummimischung bestehen, insbesondere besteht das mittlere Umfangsband 7 aus einer elektrisch leitfähigen Gummimischung. Die elektrisch leitfähige Gummimischung kann eine mit Rußmaterial gefüllte Mischung sein, mit der die elektrische Leitfähigkeit gewährleistet wird.

Das mittlere Umfangsband 7 und / oder das elektrisch leitfähige Verbindungselement 8 und / oder der Bodenverbund 3 weisen dabei einen elektrischen Ableitwiderstand von kleiner als 1*10^9 Ohm, bevorzugt kleiner als 1*10^7 Ohm, auf. Bevorzugt weisen das mittlere Umfangsband 7 und das elektrisch leitfähige Verbindungselement 8 und der Bodenverbund 3 in Summe einen elektrischen Ableitwiderstand von maximal 1*10^10 Ohm, bevorzugt von maximal 1*10^8 Ohm, auf. Der Reifen kann somit einen elektrischen Ableitwiderstand von maximal 1*10^10 Ohm, bevorzugt von maximal 1*10^8 Ohm, aufweisen.

Zweckmäßig ist es, wenn elektrisch nicht leitfähig ausgebildeten Bauteile, wie die äußeren Umfangsbänder 9 und/oder das erste Zwischenbauteil 5 und/oder eine oder beide Seitenwände 4 aus einer elektrisch leitfähigen Gummimischung ausgebildet sind oder diese aufweisen. Zweckmäßig ist es, wenn die elektrisch nicht leitfähig ausgebildeten Bauteile wie die äußeren Umfangsbänder 9 und/oder das erste Zwischenbauteil 5 und/oder eine oder beide Seitenwände 4 jeweils einen elektrischen Ableitwiderstand von mindestens 1*10^11 Ohm aufweist.

Beide Seitenwände 4 der zwei Seitenwände bestehen aus einer nichtkreidenden und elektrisch nicht leitfähigen Gummimischung, insbesondere aus einer nichtkreidenden und elektrisch nicht leitfähigen Silikamischung. Alternativ kann auch nur eine der beiden Seitenwände 4 derart ausgebildet sein.

Beim auf einer Felge montierten Reifen 1 ist die Felge über den Bodenverbund 3 mit dem vom Bodenverbund 3 über das elektrisch leitfähige Verbindungselement 8 und den mittleren Umfangsring 7 bis zur Lauffläche 6 geführten elektrisch leitfähigen Pfad verbunden.

Der dargestellte Bodenverbund 3 weist radial außen eine elektrisch leitfähig ausgebildete Bodengummimischung auf und radial innen ein Bodenprofil mit Metallkern. Der Bodenverbund 3 kann aber auch anders ausgebildet sein.

Das in der Figur 2 in einer Querschnittansicht dargestellte Ausführungsbeispiel ist weitgehend wie in der Figur 1 dargestellt ausgeführt. Es unterscheidet sich von dem in der Figur 1 dargestellten Vollreifen insbesondere durch die Ausführung des Zwischenbauteils. Konkret unterscheidet es sich dadurch, dass der Fahrzeugreifen 1 ein radial zwischen dem Bodenverbund 3 und dem Laufstreifen 2 sowie axial zwischen den zwei Seitenwänden 4 angeordnetes zweites Zwischenbauteil 5' aufweist, welches elektrisch leitfähig ausgebildet ist und das elektrisch leitfähige Verbindungselement 8 bildet oder mitbildet. Eine Führung des elektrisch leitfähigen Verbindungselements 8 um ein elektrisch nicht leitfähig ausgebildetes erstes Zwischenbauteil ist somit nicht nötig.

Weiter weist der Bodenverbund eine drahtarmierte Elastikbandage oder eine elektrisch leitfähige Stahlbodenbandage auf.

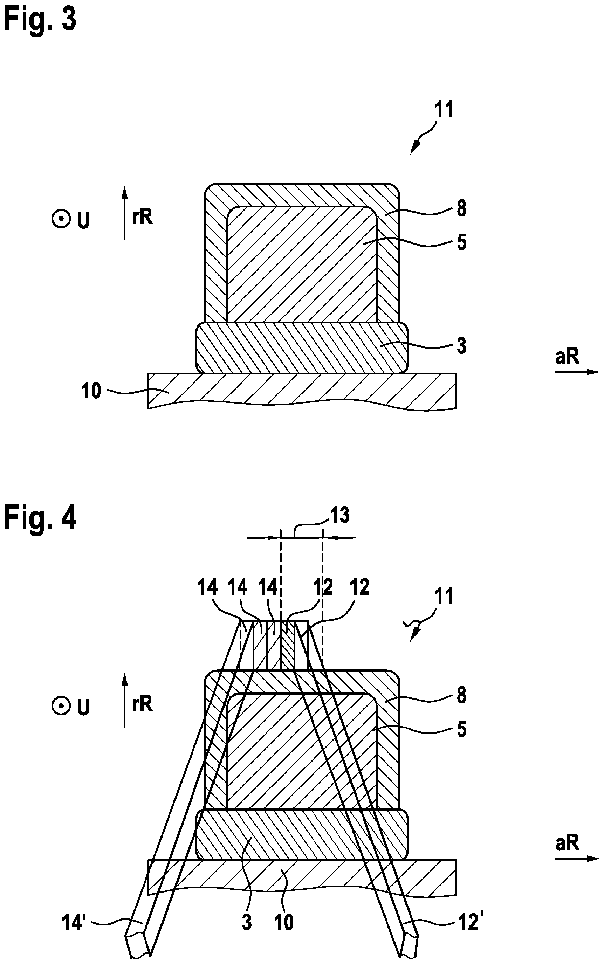

Die Figuren 3 bis 6 verdeutlichen das erfindungsgemäße Verfahren zur Herstellung eines erfindungsgemäßen Fahrzeugreifens. Auch die in den Figuren 1 und 2 dargestellten Reifen 1 können durch dieses Verfahren hergestellt werden.

Die Fig. 3 zeigt das nicht vulkanisierte Vorprodukt 11 eines Reifenrohlings 17 auf einer Bautrommel 10, wie es in Schritt a) bereitgestellt. Das Vorprodukt 11 besteht zumindest aus einem elektrisch leitfähigen Bodenverbund 3 und einem mit dem Bodenverbund 3 verbundenen elektrisch leitfähigen Verbindungselement 8.

Die Fig. 4 zeigt Schritt b) und c), die zumindest teilweise zeitgleich oder nacheinander erfolgen können.

Die Figur 4 zeigt gemäß Schritt b) das Applizieren eines elektrisch leitfähigen Materials 12 auf einen ersten axialen Bereich 13 des elektrisch leitfähigen Verbindungselements 8 und über einen Reifenumfang umlaufend zur Bildung eines mittleren Umfangsbands 7, welches sich zumindest über einen Umfang des Reifens erstreckt und elektrisch leitfähig ausgebildet ist.

Wie dargestellt, kann das Applizieren des elektrisch leitfähigen Materials 12 durch Aufwickeln oder Aufspulen zumindest eines Streifens 12' des elektrisch leitfähigen Materials 12 erfolgen. Der Streifen 12' ist schematisch aus der Schnittebene herausragend dargestellt. In einer anderen Herstellungsvariante kann die Applikation des elektrisch leitfähigen Materials 12 alternativ durch Einspritzen des elektrisch leitfähigen Materials 12 erfolgen.

Die Figur 4 zeigt weiter gemäß Schritt c) das Applizieren einer elektrisch nicht leitfähigen insbesondere nichtkreidenden Gummimischung 14 auf das Vorprodukt 11 auf einer Seite axial außerhalb des ersten axialen Bereichs 13 zur Bildung eines von zwei äußeren Umfangsbändern 9, die sich über den Reifenumfang erstrecken. Zeitversetzt oder parallel hierzu kann das Applizieren elektrisch nicht leitfähigen insbesondere nichtkreidenden Gummimischung 14 auf das Vorprodukt 11 auf der anderen Seite axial außerhalb des ersten axialen Bereichs 13 zur Bildung des anderen von zwei äußeren Umfangsbändern 9, die sich über den Reifenumfang erstrecken.

Nicht dargestellt ist Schritt d), das Applizieren der Seitenwände 4.

Das Applizieren der elektrisch nicht leitfähigen insbesondere nichtkreidenden Gummimischung 14 zur Bildung zumindest eines der äußeren Umfangsbänder 9 und auch das Applizieren der an das äußere Umfangsband 9 anschließende Seitenwand 4 kann durch Aufwickeln oder Aufspulen zumindest eines Streifens 14' einer elektrisch nicht leitfähigen insbesondere nichtkreidenden Gummimischung erfolgen. Der Streifen 14' ist schematisch aus der Schnittebene herausragend dargestellt. Beim Aufwickeln oder Aufspulen des zumindest einen Streifens 14' ist dabei ein Verhältnis aus einer Anlieferungsgeschwindigkeit des zumindest einen Streifens zu einer Wickel- oder Spulgeschwindigkeit im Bereich der zu bildenden Seitenwand 4 bevorzugt sowohl kleiner als im Bereich des zu bildenden äußeren Umfangsbands 9 als auch kleiner als eins.

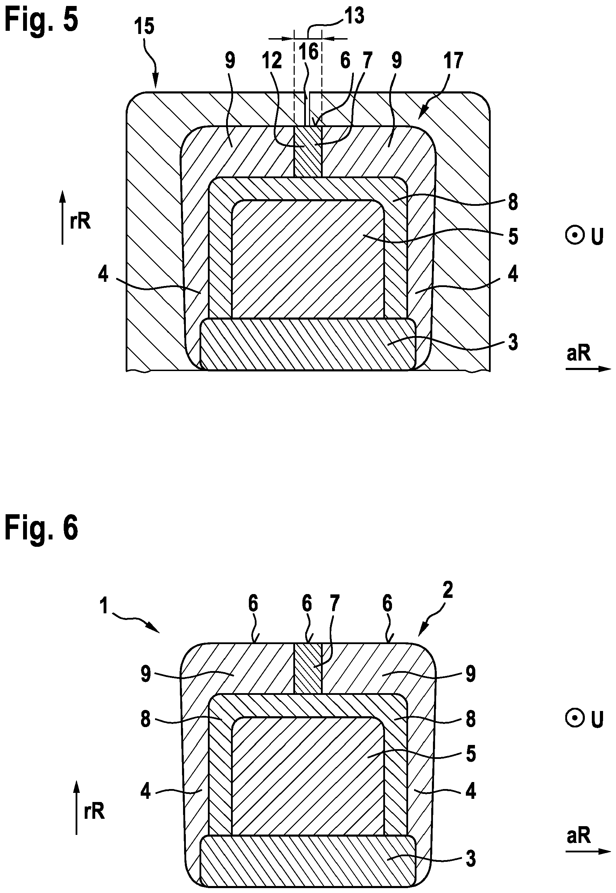

Gegebenenfalls kann der Reifenrohling 17 durch weitere Schritte fertiggestellt und von der Bautrommel 11 abgenommen werden und anschließend gemäß Schritt e) in einer Vulkanisationsform 15 positioniert werden. Die Figur 5 zeigt den Reifenrohling 17 in der Vulkanisationsform 15. Die Vulkanisationsform weist einen Austriebsspalt 16 auf, der bevorzugt axial im ersten axialen Bereich 13 angeordnet ist.

Anschließend erfolgt gemäß Schritt f) die formgebende Vulkanisations des Reifenrohlings 17 zum Reifen 1. Der so hergestellte Reifen ist in der Figur 6 in einer Querschnittansicht dargestellt.

Zumindest eine Seitenwand 4, bevorzugt beide Seitenwände 4, der beiden Seitenwände können aus einer nichtkreidenden und elektrisch nicht leitfähigen Gummimischung, insbesondere aus einer nichtkreidenden und elektrisch nicht leitfähigen Silikamischung, bestehen.

Das mittlere Umfangsband 7 und / oder das elektrisch leitfähige Verbindungselement 8 und / oder der Bodenverbund 3 können ganz oder teilweise aus einer elektrisch leitfähigen Gummimischung bestehen, insbesondere besteht das mittlere Umfangsband 7 aus einer elektrisch leitfähigen Gummimischung

Das mittlere Umfangsband 7 und / oder das elektrisch leitfähige Verbindungselement 8 und / oder der Bodenverbund 3 kann jeweils einen elektrischen Ableitwiderstand von kleiner als 1*10^9 Ohm, bevorzugt von kleiner als 1*10^7 Ohm, aufweisen.

Zur Herstellung des in der Figur 6 oder der Figur 1 dargestellten Ausführungsbeispiels weist das Vorprodukt 11 in Schritt a) radial zwischen dem Bodenverbund 3 und dem elektrisch leitfähigen Verbindungselement 8 ein erstes Zwischenbauteil 5 auf. Weiter ist das erste Zwischenbauteil 5 elektrisch nicht leitfähig ausgebildet, und das elektrisch leitfähige Verbindungselement 8 ist auf einer radial äußeren Oberfläche des ersten Zwischenbauteils 5 aufliegend auf einer oder auf beiden axialen Seiten des Reifens um das erste Zwischenbauteil 5 herum bis zum Bodenverbund 3 geführt.

### Bezugszeichenliste

- 1: Vollreifen
- 2: Laufstreifen
- 3: Bodenverbund
- 4: Seitenwand
- 5: erstes Zwischenbauteil
- 5': zweites Zwischenbauteil
- 6: Lauffläche
- 7: mittleres Umlaufband
- 8: elektrisch leitfähiges Verbindungselement
- 9: äußeres Umlaufband
- 10: Bautrommel
- 11: Vorprodukt
- 12: elektrisch leitfähiges Material zur Bildung des mittleren Umlaufbands
- 12': Streifen
- 13: erster axialer Bereich
- 14: elektrisch nicht leitfähige Gummimischung
- 14`: Streifen
- 15: Vulkanisationsform
- 16: Austriebsspalt
- 17: Reifenrohling
- U: Umfangsrichtung
- rR: radiale Richtung
- aR: axiale Richtung

## Patentansprüche

1. Fahrzeugreifen (1), wobei der Fahrzeugreifen ein Vollreifen (1) ist, mit einem Laufstreifen (2) mit einer Lauffläche (6), mit einem elektrisch leitfähigen Bodenverbund (3) und mit zwei Seitenwänden (4),
der Laufstreifen (2) drei in einer Abfolge in axialer Richtung aR angeordnete, sich über einen Reifenumfang erstreckende Umfangsbänder (7,9), welche jeweils über den gesamten Umfang die Lauffläche (6) mitbilden, aufweist, dass das mittlere Umfangsband (7) der drei Umfangsbänder elektrisch leitfähig ausgebildet ist und über ein zur Gänze in einem Reifeninneren angeordnetes elektrisch leitfähiges Verbindungselement (8) mit dem elektrisch leitfähigen Bodenverbund (3) verbunden ist und
dass die beiden äußeren Umfangsbänder (9) der drei Umfangsbänder aus einer elektrisch nicht leitfähigen Gummimischung bestehen,
**dadurch gekennzeichnet, dass**
der Fahrzeugreifen (1) ein radial zwischen dem Bodenverbund (3) und dem Laufstreifen (2) sowie axial zwischen den zwei Seitenwänden (4) angeordnetes erstes Zwischenbauteil (5) aufweist, welches elektrisch nicht leitfähig ausgebildet ist und
dass das elektrisch leitfähige Verbindungselement (8) vom mittleren Umfangsband (7) aus auf einer oder auf beiden axialen Seiten des Reifens in Richtung der jeweiligen Seitenwand geführt ist und axial zwischen dem ersten Zwischenbauteil (5) und der jeweiligen Seitenwand (4) um das erste Zwischenbauteil (5) herum bis zum Bodenverbund (3) geführt ist.

2. Fahrzeugreifen (1) nach Anspruch 1, **dadurch gekennzeichnet, dass** die beiden äußeren Umfangsbänder (9) der drei Umfangsbänder aus einer nichtkreidenden elektrisch nicht leitfähigen Gummimischung bestehen.

3. Fahrzeugreifen (1) nach einem der vorhergehenden Ansprüche,
**dadurch gekennzeichnet, dass**
das mittlere Umfangsband (7) und / oder das elektrisch leitfähige Verbindungselement (8) und / oder der Bodenverbund (3) jeweils ganz oder teilweise aus einer elektrisch leitfähigen Gummimischung bestehen, insbesondere dass das mittlere Umfangsband (7) aus einer elektrisch leitfähigen Gummimischung besteht.

4. Fahrzeugreifen (1) nach einem der vorhergehenden Ansprüche,
**dadurch gekennzeichnet, dass**
das mittlere Umfangsband (7) und das elektrisch leitfähige Verbindungselement (8) und der Bodenverbund (3) in Summe einen elektrischen Ableitwiderstand von maximal 1*10^10 Ohm, bevorzugt von maximal 1*10^8 Ohm, aufweisen.

5. Fahrzeugreifen (1) nach einem der vorhergehenden Ansprüche,
**dadurch gekennzeichnet, dass**
zumindest eine Seitenwand (4), bevorzugt beide Seitenwände (4), der zwei Seitenwände aus einer nichtkreidenden und / oder elektrisch nicht leitfähigen Gummimischung gebildet ist bzw. sind.

6. Fahrzeugreifen (1) nach einem der vorhergehenden Ansprüche,
**dadurch gekennzeichnet, dass**
der Fahrzeugreifen (1) ein radial zwischen dem Bodenverbund (3) und dem Laufstreifen (2) sowie axial zwischen den zwei Seitenwänden (4) angeordnetes zweites Zwischenbauteil (5') aufweist, welches elektrisch leitfähig ausgebildet ist und das elektrisch leitfähige Verbindungselement (8) bildet oder mitbildet.

7. Fahrzeugreifen nach einem der vorhergehenden Ansprüche,
**dadurch gekennzeichnet, dass**
der Bodenverbund (3) eine elektrisch leitfähige Stahlbodenbandage oder eine drahtarmierte Elastikbandage aufweist.

8. Verfahren zur Herstellung eines Fahrzeugreifens (1),
wobei der Fahrzeugreifen (1) ein radial zwischen dem Bodenverbund (3) und dem Laufstreifen (2) sowie axial zwischen den zwei Seitenwänden (4) angeordnetes erstes Zwischenbauteil (5) aufweist, welches elektrisch nicht leitfähig ausgebildet ist und
wobei das elektrisch leitfähige Verbindungselement (8) vom mittleren Umfangsband (7) aus auf einer oder auf beiden axialen Seiten des Reifens in Richtung der jeweiligen Seitenwand geführt ist und axial zwischen dem ersten Zwischenbauteil (5) und der jeweiligen Seitenwand (4) um das erste Zwischenbauteil (5) herum bis zum Bodenverbund (3) geführt ist,
wobei das Verfahren zumindest die folgenden Schritte umfasst:
a) Bereitstellen eines nicht vulkanisierten Vorproduktes (11) eines Reifenrohlings auf einer Bautrommel (10), wobei das Vorprodukt (11) zumindest aus einem elektrisch leitfähigen Bodenverbund (3) und einem mit dem Bodenverbund (3) verbundenen elektrisch leitfähigen Verbindungselement (8) besteht,
b) Applizieren eines elektrisch leitfähigen Materials (12) auf einen ersten axialen Bereich (13) des elektrisch leitfähigen Verbindungselements (8) und über einen Reifenumfang umlaufend zur Bildung eines mittleren Umfangsbands (7), welches sich zumindest über einen Umfang des Reifens erstreckt und elektrisch leitfähig ausgebildet ist,
c) auf jeder Seite axial außerhalb des ersten axialen Bereich (13) applizieren einer elektrisch nicht leitfähigen Gummimischung (14) auf das Vorprodukt (11) zur Bildung von zwei äußeren Umfangsbändern (9), die sich über den Reifenumfang erstrecken;
d) Applizieren der Seitenwände (4);
e) Fertigstellen des Reifenrohlings (17);
e) Positionieren des Reifenrohlings (17) in einer Vulkanisationsform (15);
f) formgebendes Vulkanisieren des Reifenrohlings.

9. Verfahren nach Anspruch 8, **dadurch gekennzeichnet, dass** in Schritt b) das Applizieren des elektrisch leitfähigen Materials (12) durch Aufwickeln oder Aufspulen zumindest eines Streifens des elektrisch leitfähigen Materials (12) oder durch Einspritzen des elektrisch leitfähigen Materials (12) erfolgt.

10. Verfahren nach einem der Ansprüche 8 oder 9, **dadurch gekennzeichnet, dass** die Vulkanisationsform einen Austriebsspalt (16) aufweist und dass der Austriebsspalt (16) axial im ersten axialen Bereich (13) angeordnet ist.

11. Verfahren nach einem der Ansprüche 8 bis 10, **dadurch gekennzeichnet, dass** das Vorprodukt (11) in Schritt a) radial zwischen dem Bodenverbund (3) und dem elektrisch leitfähigen Verbindungselement (8) ein erstes Zwischenbauteil (5) aufweist, dass das erste Zwischenbauteil (5) elektrisch nicht leitfähig ausgebildet ist, und dass das elektrisch leitfähige Verbindungselement (8) auf einer radial äußeren Oberfläche des ersten Zwischenbauteils (5) aufliegend auf einer oder auf beiden axialen Seiten des Reifens um das erste Zwischenbauteil (5) herum bis zum Bodenverbund (3) geführt ist.

12. Verfahren nach einem der Ansprüche 8 bis 11, **dadurch gekennzeichnet, dass** das Applizieren der elektrisch nicht leitfähigen Gummimischung (14) zur Bildung zumindest eines der äußeren Umfangsbänder (9) und das Applizieren der an das äußere Umfangsband (9) anschließende Seitenwand (4) durch Aufwickeln oder Aufspulen zumindest eines Streifens (14') einer elektrisch nicht leitfähigen Gummimischung erfolgt, und dass beim Aufwickeln oder Aufspulen des zumindest einen Streifens (14') ein Verhältnis aus einer Anlieferungsgeschwindigkeit des zumindest einen Streifens zu einer Wickel-oder Spulgeschwindigkeit im Bereich der zu bildenden Seitenwand (4) sowohl kleiner ist als im Bereich des zu bildenden äußeren Umfangsbands (9) als auch kleiner ist als 1.

13. Verfahren nach einem der Ansprüche 8 bis 12, **dadurch gekennzeichnet, dass** zumindest eine Seitenwand (4), bevorzugt beide Seitenwände (4), der beiden Seitenwände aus einer nichtkreidenden und/oder elektrisch nicht leitfähigen Gummimischung.

14. Verfahren nach einem der Ansprüche 8 bis 13, **dadurch gekennzeichnet, dass** das mittlere Umfangsband (7) und / oder das elektrisch leitfähige Verbindungselement (8) und / oder der Bodenverbund (3) ganz oder teilweise aus einer elektrisch leitfähigen Gummimischung bestehen, insbesondere dass das mittlere Umfangsband (7) aus einer elektrisch leitfähigen Gummimischung besteht.

15. Verfahren nach einem der Ansprüche 8 bis 14, **dadurch gekennzeichnet, dass** der Fahrzeugreifen gemäß zumindest einem der Ansprüche 1 bis 7 ausgebildet ist.

## Claims

1. Vehicle tyre (1), wherein the vehicle tyre is a solid tyre (1), having a tread (2) with a tread surface (6), having an electrically conductive bottom bond (3) and having two sidewalls (4),
the tread (2) comprises three circumferential bands (7, 9), which are arranged in a sequence in the axial direction aR, extend over a tyre circumference and each contribute to forming the tread surface (6) over the entire circumference,
in that the central circumferential band (7) of the three circumferential bands is formed as electrically conductive and is connected to the electrically conductive bottom bond (3) by an electrically conductive connecting element (8) arranged entirely in an interior of the tyre, and
in that the two outer circumferential bands (9) of the three circumferential bands consist of an electrically nonconductive rubber compound,
**characterized in that**
the vehicle tyre (1) comprises a first intermediate component (5) which is arranged radially between the bottom bond (3) and the tread (2) and axially between the two sidewalls (4) and is formed as electrically nonconductive, and
**in that** the electrically conductive connecting element (8) is guided from the central circumferential band (7) on one axial side or on both axial sides of the tyre in the direction of the respective sidewall and is guided axially between the first intermediate component (5) and the respective sidewall (4), around the first intermediate component (5), as far as the bottom bond (3).

2. Vehicle tyre (1) according to Claim 1, **characterized in that**
the two outer circumferential bands (9) of the three circumferential bands consist of a non-marking, electrically nonconductive rubber compound.

3. Vehicle tyre (1) according to either of the preceding claims,
**characterized in that**
the central circumferential band (7) and/or the electrically conductive connecting element (8) and/or the bottom bond (3) each completely or partially consist of an electrically conductive rubber compound, in particular **in that** the central circumferential band (7) consists of an electrically conductive rubber compound.

4. Vehicle tyre (1) according to one of the preceding claims,
**characterized in that**
the central circumferential band (7) and the electrically conductive connecting element (8) and the bottom bond (3) in total have an electrical discharge resistance of at most 1*10^10 ohms, preferably at most 1*10^8 ohms.

5. Vehicle tyre (1) according to one of the preceding claims,
**characterized in that**
at least one sidewall (4), preferably both sidewalls (4), of the two sidewalls is/are made from a non-marking and/or electrically nonconductive rubber compound.

6. Vehicle tyre (1) according to one of the preceding claims,
**characterized in that**
the vehicle tyre (1) comprises a second intermediate component (5') which is arranged radially between the bottom bond (3) and the tread (2) and axially between the two sidewalls (4), is formed as electrically conductive, and forms or contributes to forming the electrically conductive connecting element (8).

7. Vehicle tyre according to one of the preceding claims,
**characterized in that**
the bottom bond (3) comprises an electrically conductive steel-based press-on band or a wire-reinforced elastic band.

8. Method for producing a vehicle tyre (1),
wherein the vehicle tyre (1) comprises a first intermediate component (5) which is arranged radially between the bottom bond (3) and the tread (2) and axially between the two sidewalls (4) and is formed as electrically nonconductive, and wherein the electrically conductive connecting element (8) is guided from the central circumferential band (7) on one axial side or on both axial sides of the tyre in the direction of the respective sidewall and is guided axially between the first intermediate component (5) and the respective sidewall (4), around the first intermediate component (5), as far as the bottom bond (3),
wherein the method comprises at least the following steps:
a) providing a non-vulcanized preliminary product (11) of a green tyre on a building drum (10), wherein the preliminary product (11) consists at least of an electrically conductive bottom bond (3) and an electrically conductive connecting element (8) connected to the bottom bond (3),
b) applying an electrically conductive material (12) to a first axial region (13) of the electrically conductive connecting element (8) and over and around the tyre circumference to form a central circumferential band (7), which extends at least over a circumference of the tyre and is formed as electrically conductive,
c) applying, on each side axially outside the first axial region (13), an electrically nonconductive rubber compound (14) to the preliminary product (11) to form two outer circumferential bands (9), which extend over the tyre circumference;
d) applying the sidewalls (4);
e) finishing the green tyre (17);
e) positioning the green tyre (17) in a vulcanization mould (15);
f) vulcanizing the green tyre by moulding.

9. Method according to Claim 8, **characterized in that**,
in step b), the application of the electrically conductive material (12) is done by winding up or coiling up at least one strip of the electrically conductive material (12) or by injecting the electrically conductive material (12).

10. Method according to either of Claims 8 and 9, **characterized in that** the vulcanization mould has a flash gap (16) and **in that** the flash gap (16) is arranged axially in the first axial region (13).

11. Method according to one of Claims 8 to 10, **characterized in that** the preliminary product (11) in step a) has a first intermediate component (5) radially between the bottom bond (3) and the electrically conductive connecting element (8), **in that** the first intermediate component (5) is formed as electrically nonconductive, and **in that** the electrically conductive connecting element (8) is guided on a radially outer surface of the first intermediate component (5) on one axial side or both axial sides of the tyre, around the first intermediate component (5), as far as the bottom bond (3).

12. Method according to one of Claims 8 to 11, **characterized in that** the application of the electrically nonconductive rubber compound (14) is done so as to form at least one of the outer circumferential bands (9) and the application of the side wall (4) adjoining the outer circumferential band (9) is done by winding up or coiling up at least one strip (14') of an electrically nonconductive rubber compound, and **in that**, when winding up or coiling up the at least one strip (14'), a ratio of a delivery speed of the at least one strip to a winding or coiling speed, in the region of the sidewall (4) to be formed is both smaller than in the region of the outer circumferential band (9) to be formed and is smaller than 1.

13. Method according to one of Claims 8 to 12, **characterized in that** at least one sidewall (4), preferably both sidewalls (4), of the two sidewalls consist of a non-marking and/or electrically nonconductive rubber compound.

14. Method according to one of Claims 8 to 13, **characterized in that** the central circumferential band (7) and/or the electrically conductive connecting element (8) and/or the bottom bond (3) completely or partially consist of an electrically conductive rubber compound, in particular **in that** the central circumferential band (7) consists of an electrically conductive rubber compound.

15. Method according to one of Claims 8 to 14, **characterized in that** the vehicle tyre according to at least one of Claims 1 to 7 is formed.

## Revendications

1. Pneumatique de véhicule (1), le pneumatique de véhicule étant un pneumatique plein (1), ledit pneumatique comprenant une bande de roulement (2) pourvue d'une surface de roulement (6), un composite de base électriquement conducteur (3) et deux flancs (4),
la bande de roulement (2) comportant trois bandes circonférentielles (7, 9) qui sont disposées suivant une séquence dans la direction axiale aR, qui s'étendent sur la circonférence du pneumatique qui forme chacune également la surface de roulement (6) sur toute la circonférence,
la bande circonférentielle médiane (7) des trois bandes circonférentielles étant conçue pour être électriquement conductrice et étant reliée au composite de base électriquement conducteur (3) par le biais d'un élément de liaison électriquement conducteur (8) disposé entièrement à l'intérieur du pneumatique et
les deux bandes circonférentielles extérieures (9) des trois bandes circonférentielles étant en un mélange de caoutchoucs électriquement non-conducteur,
**caractérisé en ce que**
le pneumatique de véhicule (1) comporte un premier composant intermédiaire (5) qui est disposée radialement entre I composite de base (3) et la bande de roulement (2) ainsi que axialement entre les deux flancs (4) et qui est conçue pour être électriquement non-conducteur et
l'élément de liaison électriquement conducteur (8) est guidé depuis la bande circonférentielle médiane (7) sur un côté axial ou les deux côtés axiaux du pneumatique en direction du flanc respectif et est guidé axialement entre le premier composant intermédiaire (5) et le flanc respectif (4) autour du premier composant intermédiaire (5) jusqu'au composite de base (3).

2. Pneumatique de véhicule (1) selon la revendication 1, **caractérisé en ce que** les deux bandes circonférentielles extérieures (9) des trois bandes circonférentielles sont en un mélange de caoutchoucs non-marquant et électriquement non-conducteur.

3. Pneumatique de véhicule (1) selon l'une des revendications précédentes, **caractérisé en ce que**
la bande circonférentielle médiane (7) et/ou l'élément de liaison électriquement conducteur (8) et/ou le composite de base (3) sont chacun en totalité ou en partie en un mélange de caoutchoucs électriquement conducteur, en particulier **en ce que** la bande circonférentielle médiane (7) est un mélange de caoutchoucs électriquement conducteur.

4. Pneumatique de véhicule (1) selon l'une des revendications précédentes, **caractérisé en ce que**
la bande circonférentielle médiane (7) et l'élément de liaison électriquement conducteur (8) et le composite de base (3) ont une résistance de fuite électrique totale de 1*10^10 ohms maximum, de préférence de 1*10^8 ohms maximums.

5. Pneumatique de véhicule (1) selon l'une des revendications précédentes, **caractérisé en ce que**
au moins un flanc (4), de préférence les deux flancs (4), des deux flancs sont formés d'un mélange de caoutchoucs non-marquant et/ou électriquement non-conducteur.

6. Pneumatique de véhicule (1) selon l'une des revendications précédentes, **caractérisés en ce que**
le pneumatique de véhicule (1) comporte un deuxième composant intermédiaire (5') qui est disposé radialement entre le composite de base (3) et la bande de roulement (2) ainsi que axialement entre les deux flancs (4), qui est conçu pour être électriquement conducteur et qui forme l'élément de liaison électriquement conducteur (8) ou fait partie de celui-ci.

7. Pneumatique de véhicule selon l'une des revendications précédentes, **caractérisé en ce que**
le composite de base (3) comporte un bandage de base en acier électriquement conducteur ou un bandage élastique renforcé par des fils métalliques.

8. Procédé de fabrication d'un pneumatique de véhicule (1),
le pneumatique de véhicule (1) comportant un premier composant intermédiaire (5) qui est disposé radialement entre le composite de base (3) et la bande de roulement (2) ainsi que axialement entre les deux flancs (4) et qui est conçu pour être électriquement non-conducteur et
l'élément de liaison électriquement conducteur (8) étant guidé depuis la bande circonférentielle médiane (7) sur un côté axial ou les deux côtés axiaux du pneumatique en direction du flanc respectif et étant guidé axialement entre le premier composant intermédiaire (5) et le flanc respectif (4) autour du premier composant intermédiaire (5) jusqu'au composite de base (3),
le procédé comprenant au moins les étapes suivantes :
a) fournir un produit semi-fini non vulcanisé (11) d'un pneumatique cru sur un tambour de construction (10), le produit semi-fini (11) étant au moins en un composite de base électriquement conducteur (3) et un élément de liaison électriquement conducteur (8) relié au composite de base (3),
b) appliquer un matériau électriquement conducteur (12) sur une première zone axiale (13) de l'élément de liaison électriquement conducteur (8) et périphériquement sur une circonférence de pneumatique pour former une bande circonférentielle médiane (7) qui s'étend au moins sur une circonférence du pneumatique et qui est conçu pour être électriquement conducteur,
c) appliquer un mélange de caoutchoucs (14) électriquement non-conducteur sur le produit semi-fini (11) de chaque côté axialement à l'extérieur de la première zone axiale (13) pour former deux bandes circonférentielles extérieures (9) qui s'étendent sur la circonférence du pneumatique ;
d) appliquer les flancs (4) ;
e) finir le pneumatique cru (17) ;
e) positionner la pneumatique cru (17) dans un moule de vulcanisation (15) ;
f) mettre en forme par vulcanisation le pneumatique cru.

9. Procédé selon la revendication 8, **caractérisé en ce que**
à l'étape b) l'application du matériau électriquement conducteur (12) est effectuée par enroulement ou bobinage au moins d'une bande du matériau électriquement conducteur (12) ou par injection du matériau électriquement conducteur (12).

10. Procédé selon l'une des revendications 8 ou 9, **caractérisé en ce que** le moule de vulcanisation comporte une fente d'éjection (16) et **en ce que** la fente d'éjection (16) est disposé axialement dans la première zone axiale (13).

11. Procédé selon l'une des revendications 8 à 10, **caractérisé en ce que** le produit semi-fini (11) comporte, à l'étape a) un premier composant intermédiaire (5) radialement entre le composite de base (3) et l'élément de liaison électriquement conducteur (8), **en ce que** le premier composant intermédiaire (5) est conçu pour être électriquement non-conducteur, et **en ce que** l'élément de liaison électriquement conducteur (8) est guidé, en appui sur une surface radialement extérieure du premier composant intermédiaire (5), sur un côté axial ou sur les deux côtés axiaux du pneumatique autour du premier composant intermédiaire (5) jusqu'au composite de base (3).

12. Procédé selon l'une des revendications 8 à 11, **caractérisé en ce que** l'application du mélange de caoutchoucs électriquement non-conducteur (14) pour former au moins une des bandes circonférentielles extérieures (9) et l'application du flanc (4), faisant suite à la bande circonférentielle extérieure (9), sont effectuées par enroulement ou bobinage d'au moins une bande (14') d'un mélange de caoutchoucs électriquement non-conducteur, et **en ce que**, lors de l'enroulement ou du bobinage, de l'au moins une bande (14'), un rapport d'une vitesse d'amenée de l'au moins une bande à une vitesse d'enroulement ou de bobinage dans la zone du flanc (4) à former est à la fois inférieur à celui dans la zone de la bande circonférentielle extérieure (9) à former et inférieur à 1.

13. Procédé selon l'une des revendications 8 à 12, **caractérisé en ce qu'**au moins un flanc (4), de préférence les deux flancs (4), des deux flancs sont en un matériau non marquant et/ou en un mélange de caoutchoucs électriquement non-conducteur.

14. Procédé selon l'une des revendications 8 à 13, **caractérisé en ce que** la bande circonférentielle médiane (7) et/ou l'élément de liaison électriquement conducteur (8) et/ou le composite de base (3) sont en totalité ou en partie en un mélange de caoutchoucs électriquement conducteur, en particulier **en ce que** la bande circonférentielle médiane (7) est un mélange de caoutchoucs électriquement conducteur.

15. Procédé selon l'une des revendications 8 à 14, **caractérisé en ce que** le pneumatique de véhicule est conçu selon l'une au moins des revendications 1 à 7.
